# EUROPEAN PATENT SPECIFICATION

(11) **EP 2 781 345 B1**
(45) Date of publication and mention of the grant of the patent: **28.02.2018**
(21) Application number: 13170632.7
(22) Date of filing: 05.06.2013
(51) Int. Cl.: B29C 70/86, B29C 70/84, B29C 33/00, B29C 70/48, B29D 99/00

(54) **Method and system for producing composite structures**
Verfahren und System zur Herstellung von Verbundstrukturen
Procédé et système de production de structures composites

(30) Priority: 21.03.2013 EP 13160337
(43) Date of publication of application: 24.09.2014
(73) Proprietor: Airbus Operations GmbH, 21129 Hamburg (DE)
(72) Inventor: Brok, Wouter, 23847 Pölitz (DE); Schwing, Bernd, 30173 Hannover (DE); Zahlen, Pierre, 21680 Stade (DE)
(74) Representative: Isarpatent

(56) References cited:
- EP-A1- 1 364 770
- EP-A2- 0 368 817

## Description

The present invention relates to a method and a system for producing a composite structure, and especially for use in fabricating a vehicle body structure formed from one or more composite components, such as fibre-reinforced polymer (FRP) components. The present invention also relates to a vehicle structure, particularly a fuselage or airframe structure for an aircraft or spacecraft, fabricated using such a method and/or system.

Airframe and fuselage structures produced today are typically weight-optimized and therefore designed for relatively high loading. Such structures generally demand small assembly- and mating-tolerances compared to their overall dimensions; for example, assembly/mating tolerances of tenths of a millimetre for components of several meters in size. Some techniques for addressing this challenge in fuselage or airframe structures fabricated from composite components include: (1) pairing two soft (i.e. non-cured) components for so-called "co-curing"; (2) pairing a soft (non-cured) component with a hard (cured) component for so-called "co-bonding"; (3) pairing two hard (cured) components and closing gaps between them using solid elements by so-called "shimming"; and (4) forming the mating surfaces of two hard (cured) components by milling them to create neat- or well-fitting surfaces; i.e. milling so-called sacrificial layers.

### Airbus Operations GmbH

The techniques (1) and (2) pose the challenge of handling the relatively soft (non-cured) prepregs or fibre preforms. When at least one component is soft, the topology of the mating surfaces and the positioning accuracy will dictate the post-process shape of the soft component(s). These techniques (1) and (2) can thus help to avoid gaps. Currently, typical cycle times for these kinds of processes are several hours or days. Furthermore, these solutions (1) and (2) are often used on the critical path of component manufacturing. They are not typically applied in major component assembly (MCA) or final assembly line (FAL) procedures. An example of technique (1) is a resin transfer moulding method as described in published patent application EP 1 364 770 A1 which discloses the respective preambles of claims 1 and 13. Technique (3) is typically very time-consuming. Today it is a multi-step process, in which each process step takes several hours. Unlike solutions (1) and (2), the shimming process is usually applied in the MCA and FAL procedures. Hence, it is in a critical path of the overall aircraft production cycle and thus has a major impact on lead-time, recurring costs and also the required investment (e.g. if parallel stations are required due to the long process lead-time).

Technique (4) requires additional thickness on the assembly components (sacrificial layers) that can be milled or sanded away to achieve the required mating surface quality. This approach is normally not weight-optimized and is challenging with respect to tolerance management (i.e. milling accuracy, and positioning tolerances in the milling device and during the mating of assembly partners).

It is therefore an object of the present invention to provide a new and improved technique for producing or fabricating a composite structure, especially a structure having a complex geometry, which overcomes one or more of the problems and disadvantages of known techniques, including excessively long production times, material wastage, dimensional inaccuracy and/or inadequate structural quality.

In accordance with this invention, a method and a system as recited in claim 1 and claim 13, respectively, are provided for producing a composite structure, and especially for fabricating of a vehicle body structure from fibre-reinforced polymer components. Also, in accordance with this invention, a vehicle body structure, and especially a fuselage structure for an aircraft or spacecraft, may be provided as recited in claim 15. Preferred features of the invention are recited in the dependent claims.

According to one aspect, therefore, the invention provides a method of producing a composite structure, such as a fuselage or airframe structure of an aircraft, comprising the steps:
arranging a first component in a cavity of a mould;
arranging a second component adjacent the cavity of the mould containing the first component and sealing the cavity against the second component;
injecting a polymer or resin material into the cavity of the mould to infuse and/or pervade gaps or spaces between the first component and the second component; and
curing or setting the polymer or resin material within the mould to bond the first component to the second component in the structure.

With the method of the present invention, it is possible to combine the two components and to compensate for different tolerances by injecting the polymer or resin material into and/or around any gaps or spaces between those components. Thus, the filling of any gaps or spaces and the compensation of tolerances occurs in a single and fast injection moulding operation, and no time-consuming shimming is required. The polymer or resin material is typically injected in liquid form thus enabling it to readily and quickly spread and fill any gaps or spaces between the two components. The cavity of the mould typically defines an outer geometry for at least a part of the structure to be produced, and the first component may be received in the mould to abut or to contact the second component when the cavity of the mould is sealed against the second component.

In a preferred embodiment of the invention, at least one of the first and second components, and preferably both, is a composite component. That is, either or both of the first and second components may comprise or be formed from a composite material, such as a fibre-reinforced polymer (FRP). In this regard, in a particularly preferred embodiment, at least the first component arranged in the cavity of a mould is provided as a composite component. The second component, on the other hand, may be of any suitable material for the structure to be produced. For example, the second component may be formed of a plastic or polymer material, aluminium, titanium, steel, or some other metal, or a ceramic. For a broad conceptualization of this invention, it will be noted that the first component could also be formed from one of the non-composite materials listed, such that neither of the first or second components is itself comprised of a composite material. In the preferred embodiments described hereafter, however, at least the first component and preferably both the first and second components will be presumed to be composite components.

In one preferred embodiment of the invention, the polymer or resin material is a thermosetting polymer or synthetic resin and is desirably compatible with a polymer of the first and/ or second composite component for co-curing or co-bonding with those components. In this regard, examples include epoxy resins, polyester resins, vinyl ester resins, and phenol formaldehyde resins.

In another preferred embodiment of the invention, the polymer or resin material is a thermoplastic polymer or resin, which may set upon cooling after injection into the mould. By employing the method of the invention with a thermoplastic polymer or resin, the assembly of the first and second components can proceed with very quick process times, because setting of the polymer or resin occurs readily or directly (e.g. within minutes) upon cooling such that the components are then fixed or bonded to each other. Desirably, the polymer or resin material may include one or more filler or reinforcing additive, such as short fibres. In this way, the structural characteristics of the thermoplastic polymer or resin material injected can be adjusted and/or enhanced to provide desired properties (e.g. strength) in a joint between the first and second components upon setting of the polymer or resin material.

At this stage, the method may include one or more additional fixation step in which the joint between the first and second components is reinforced with mechanical fastening elements, such as rivets. In particular, after curing or setting the polymer or resin material within the mould to bond the first and second components into the desired structure, the method may include removing the structure from the mould and fixing and/or reinforcing the joint between the first and second components by mechanical fastening elements, such as rivets. Mechanical fastening techniques like riveting are well known in the field and so will not be described here in detail.

In a particularly preferred embodiment of the invention, the first component is a composite "prepreg" or non-cured, fibre-reinforced polymer preform and the second component may be a cured, fibre-reinforced polymer (FRP) component. The fibres employed in these composite components are typically selected from the group consisting of glass, aramid and carbon fibres, though carbon fibre-reinforced polymer (CFRP) materials are especially preferred. It will be noted, however, that other composite materials may also be employed. Where the first component is a prepreg or non-cured preform, the polymer or resin material selected for injection into the mould may be a thermosetting polymer or resin compatible with the polymer of the prepreg for co-curing therewith after the injecting step is complete. In this regard, the step of curing or setting the injected polymer or resin material in the mould to bond the first and second composite components in the composite structure may include heating the mould to effect co-curing of the thermosetting polymer or resin and the prepreg.

In a preferred embodiment, the step of arranging the second component adjacent the cavity of the mould includes one or more of: pressing the second component against an open side of the mould; and pressing an open side of the mould against the second component. In this connection, pressing the second component against an open side of the mould preferably involves providing a support member that both supports, and applies pressure to, the second component to press it towards and against the mould. The support member typically includes a resilient or flexible contact surface for contact with a corresponding bearing surface of the second component. Also, a seal member is preferably provided around the cavity of the mould for sealing against the second component. In this way, the seal member prevents unwanted leakage of the polymer or resin material from the mould cavity during the injecting step.

In a particularly preferred embodiment of the invention, it is possible to automate the method to provide fast, accurate, and repeatable industrial structure production and assembly in a single operation. In this regard, the method may employ one or more robot arm for positioning the mould and/or the second component relative to the mould via a support member for counter pressure.

As will be appreciated, the method of the present invention may be employed for producing various composite structures in the airframe or fuselage of an aircraft. For example, the method is particularly suitable for the production of complex panel areas or parts of an airframe or fuselage structure, such as a window frame and skin assembly, clip to skin/frame assembly, frame to skin assembly and/or DSS to skin assembly. Indeed, skilled persons will understand that the method and technique of the present invention can essentially be applied or transferred to other resin/fibre systems and applications.

According to another aspect, the present invention provides a system for producing a composite structure, particularly an airframe or fuselage structure of an aircraft, comprising:
a mould having a cavity for receiving a first component;
a support member for supporting and/or applying pressure to a second component adjacent the mould, whereby the cavity of the mould having the first component is sealed against the second component;
injection means for injecting a polymer or resin into the cavity of the mould to infuse and/or pervade gaps or spaces between the first component and the second component. Thus, the injected polymer or resin may provide consistent, stable and well-fitting contact between the first and the second components.

As noted above, desirably at least one of the first component and the second component, and preferably both, is comprised of a composite material such as a fibre-reinforced polymer, especially a carbon fibre-reinforced polymer (CFRP) material. In at least one embodiment, however, it is contemplated that the first and/or second component may be comprised of any suitable material for the structure to be produced, including but not limited to a plastic or polymer material, aluminium, titanium, steel, or some other metal, or a ceramic.

In a particularly preferred embodiment of the invention, the system may further comprise heating means for heating the polymer or resin material together with the first component in the cavity of the mould and/or the second component to set or cure the polymer or resin material and thereby to bond the first and second components and form the composite structure.

According to a further aspect, the present invention provides an aircraft having an airframe or fuselage structure produced by a method according to the invention as described above in relation to any one of the embodiments.

For a more complete understanding of the present invention and the advantages thereof, exemplary embodiments of the invention are explained in more detail in the following description with reference to the accompanying drawings, in which like reference characters designate like parts and in which:
- Fig. 1: is a perspective view of part of a hull or fuselage structure of an aircraft, i.e. a window frame panel formed from fibre-reinforced polymer components;
- Fig. 2a: is a schematic illustration of a method step in the forming of a structure with a method and system according to an embodiment of the invention;
- Fig. 2b: is a schematic illustration of another method step in forming a structure with the method and system according to an embodiment of the invention;
- Fig. 2c: is a schematic illustration of a further method step in forming a structure with the method and system according to an embodiment of the invention;
- Fig. 2d: is a schematic side view of the structure produced with the method and system of the invention;
- Fig. 3: is a schematic illustration of an aircraft having a fuselage structure fabricated using the method and system of an embodiment of the invention;
- Fig. 4: is a flow diagram that schematically illustrates a method according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as is accorded to such terms and expressions with respect to their corresponding respective areas of inquiry and study, except where specific meanings have otherwise been set forth herein.

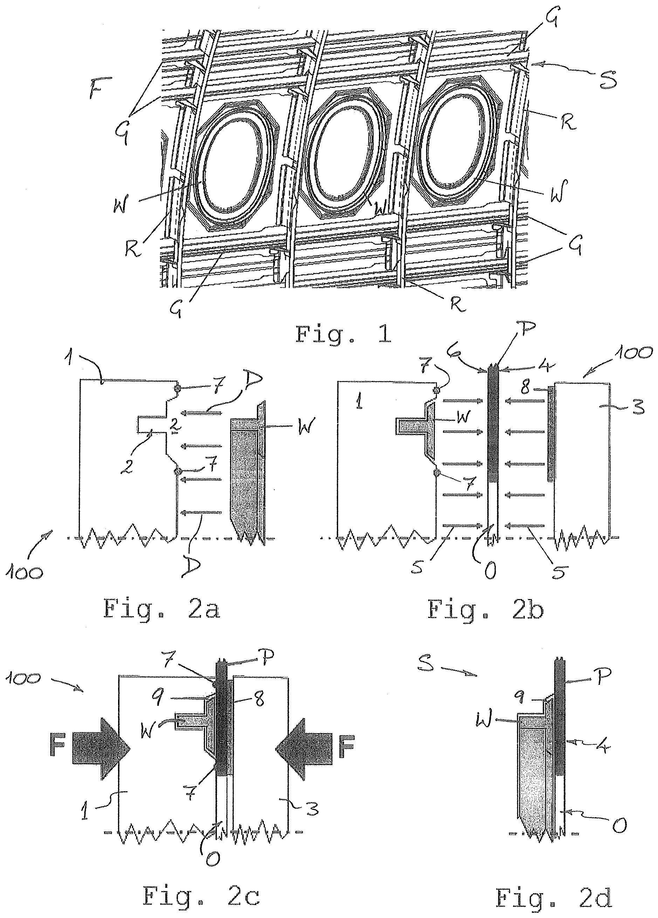

With reference firstly to Fig. 1 of the drawings, a composite structure S forming part of a fuselage or an airframe F of an aircraft is illustrated. In this embodiment, the composite structure S includes a plurality of fibre-reinforced polymer components (e.g. CFRP components) as structural members in the form of ribs R, stringers G, and oval-shaped window frame members W that are interconnected or secured with one another and to an outer panel or skin P via a range of techniques to form a window section S of the fuselage or airframe F shown. Referring now to Figs. 2a to 2d of the drawings, a system 100 and a corresponding method will be described for producing a structure S as shown in Fig. 1 according to an embodiment of this invention. The system 100 and method of this particular embodiment in Figs. 2a-2d is specifically shown and described with reference to that part of the structure S involving the interconnection or assembly of an oval-shaped window frame W and an outer panel or skin P of the fuselage structure.

As can be seen in Fig. 2a, the system 100 includes a mould or moulding tool 1 which defines a mould cavity 2 for receiving a first composite component, such as the oval-shaped window frame component W. In this regard, it will be noted that the mould or moulding tool 1 is shown in cross-section such that the cavity 2 merely represents the cross-sectional profile of the window frame component W. In this embodiment, the window frame component W has a T-shaped cross-sectional profile or geometry that substantially conforms to the cavity 2 in the moulding tool 1 enabling the window frame component W to be substantially fully received and accommodated within that mould cavity 2. The window frame component may, for example, be a "prepreg" or a non-cured CFRP preform, or alternatively a cured CFRP component, and the arrows D in Fig. 2a show the direction for inserting that window frame component W into the cavity 2 of the moulding tool 1.

Referring now to Fig. 2b of the drawings, the window frame component W can be seen fully received or accommodated in the mould cavity 2, with only a small amount of space or "play" between it and the mould 1. A second composite component, in this case a panel or skin component P having an opening O for the window formed therein, is arranged or positioned adjacent to the mould 1. Furthermore, a support member 3 is provided at a side 4 of the panel component P remote from the mould 1 and both the mould 1 and the support member 3 are configured to be moved together in the direction of arrows 5 such that a side 6 of the panel component P facing the mould 1 presses against the mould 1 to close the open mould cavity 2. In this regard, a seal member 7 preferably in the form of a resilient deformable bead is provided on an open side of the mould 1 around a periphery of the cavity 2 for sealing the cavity 2 against the facing side 6 of the composite panel component P. In addition, the support member 3 includes a resilient pad 8 (e.g. of softer material) for contacting and protecting that side 4 of the panel component P remote from the mould 1 as the mould 1 and support member 3 move together and clamp the window frame and panel components W, P between them.

With reference to Fig. 2c, a force F is applied to both the mould 1 and the support member 3 to securely hold and retain the panel or skin component P in sealing engagement with the seal member 7 surrounding the mould cavity. The components W, P and the moulding tool 1 are dimensioned such that a base of the inverted T-shaped profile of the window frame component W is very close to or in contact with the facing side 6 of the panel component P. A liquid polymer or resin material 9 is then injected into the closed mould cavity 2 to permeate and fill any gaps or spaces around or between the window frame component W and the panel or skin component P. In this case, the polymer or resin material 9 entirely surrounds the window frame component W in contact with the panel or skin component P as it infuses into the mould and fills any gaps between the components. The polymer or resin material 9 injected into the mould cavity 2 may include short fibres as a strengthening or reinforcing filler.

In one preferred embodiment, particularly where both of the first and second components W, P are pre-cured FRP composite components, the polymer or resin material 9 injected into the mould cavity 2 is a thermoplastic polymer which is heated to a liquid state for easy injection and dispersion through the gaps and spaces within the cavity. In another preferred embodiment, however, particularly where the first component W is a non-cured or only partially-cured "prepreg", the polymer or resin material injected may be a thermosetting polymer for co-curing and/or co-bonding with the window frame component W and also bonding same to the panel or skin component P, which itself may be of a composite or non-composite material.

Regardless of whether it is a thermoplastic or thermosetting polymer, the injected polymer or resin material 9 is cured or set within the moulding tool 1 to bond the window frame component W to the panel or skin component P. In this way, a well-fitting, stable and uniform interface is formed between the two components W, P and the two components are also fixed in the desired spatial relationship to one another within the structure S. Fig. 2d of the drawings shows the structure S comprising the two composite components W, P after removal from the mould 1. The injected resin material 9 surrounds the fibre-reinforced window frame component W after consolidation or setting; i.e. the resin material 9 has filled all of the gaps between the two components W, P and between the mould 1 and the component W.

In a further adaptation or embodiment of this invention, the same moulding system and process may be used to manufacture complex geometries or shapes attached to either or both of the composite components W, P in the same moulding operation; e.g. with appropriate configuration of the mould cavity 2. To this end, the polymer or resin material 9 to be injected may include short fibre reinforcement for strengthening the newly moulded geometry.

Additional reinforcing of the joint or interface between the two components W, P may be subsequently provided as required. For example, the window frame component W may subsequently also be riveted to the panel component P of the airframe or fuselage structure F by securing or fastening rivets (not shown) through a flange-type footing or base of the inverted T-shaped profile of the window frame component W and through the panel component P.

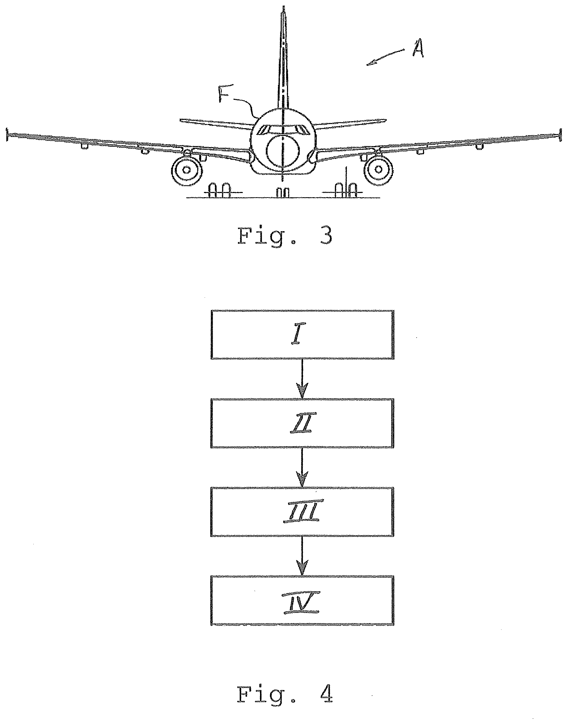

With reference to Fig. 3 of the drawings, an aircraft A is illustrated schematically and can be seen to have a fuselage or airframe F which comprises a composite structure S that substantially corresponds to the window frame section S shown in Fig. 1 of the drawings.

Referring to drawing Fig. 4, a flow diagram schematically illustrates various steps in a preferred method of the present invention. In particular, the first box I in Fig. 4 represents the step of arranging a first component, such as the window frame component W, in the cavity 2 of the mould 1, with the cavity 2 of the mould 1 defining an outer geometry for at least part of the composite structure S to be produced or fabricated. The second box II of Fig. 4 represents the step of arranging a second component, such as the panel or skin component P, adjacent to the cavity 2 of the mould 1 containing the first composite component W and sealing that cavity 2 against the second component P. The third box III of Fig. 4 represents the step of injecting a thermoplastic or thermosetting polymer or resin 9 into the cavity to surround, infuse and/or pervade the first component W in contact with the second component P as shown in Fig. 2c. The fourth box IV of Fig. 4 then represents the step of curing or setting the polymer or resin 9 within the mould 1 to bond the first component W with the second component P to thereby form the desired composite structure S.

By employing injection moulding techniques to integrate the composite components in the manufacturing of CFRP structures, tolerance compensation and component mating or assembly are able to be accurately achieved in a single industrial process with a high degree of reproducibility and a high production-rate capability.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: moulding tool or mould
- 2: mould cavity
- 3: support member
- 4: side of panel component remote from mould
- 5: arrows for movement of mould and support member
- 6: side of panel component facing mould
- 7: seal member or resilient bead
- 8: resilient pad or contact surface of support member
- 9: polymer or resin material
- 100: system
- S: composite structure
- F: fuselage or airframe
- R: rib
- G: stringer
- W: window frame component
- P: panel or skin component
- D: insertion direction for first component
- O: opening in the panel component
- A: aircraft

## Claims

1. A method of producing a fibre-reinforced polymer composite structure (S), such as an airframe or fuselage structure of an aircraft (A), comprising the steps of:
arranging a first component (W) within a cavity (2) of a mould (1);
arranging a second component (P) adjacent or next to the cavity (2) of the mould (1) containing the first component (W);
wherein at least one of the first component (W) and the second component (P) comprises fibre-reinforced polymer material;
injecting a polymer or resin (9) into the cavity (2) of the mould (1) to infuse and/or pervade gaps or spaces between the first component (W) and the second component (P); and
curing or setting the polymer or resin (9) within the mould (1) to bond the first component (W) with the second component (P) and thereby form the structure (S) **characterized in** sealing the cavity (2) against the second component (P).

2. A method according to claim 1, wherein the polymer or resin (9) is injected into the cavity (2) to surround, infuse and/or pervade the first component (W) in contact with the second component (P).

3. A method according to claim 1 or claim 2, wherein the first component (W) is a non-cured, fibre-reinforced polymer preform.

4. A method according to any of claims 1 to 3, wherein the second component (P) is a pre-cured, fibre-reinforced polymer component.

5. A method according to any one of claims 1 to 3, wherein the second component (P) is a non-composite component comprised of any one of a plastic or polymer material, aluminium, titanium, steel, or other metal, or ceramic.

6. A method according to any one of claims 1 to 5, wherein the step of arranging the second component (P) adjacent the cavity (2) of the mould (1) includes one or more of: pressing the second component (P) against an open side of the mould (1), and/or pressing an open side of the cavity (2) against a facing side (6) of the second component (P).

7. A method according to claim 6, wherein the step of pressing the second component (P) against an open side of the cavity (2) includes providing a support member (3) which supports and applies pressure to the second component (P) thereby to press it towards and against the mould (1).

8. A method according to claim 7, wherein the support member (3) comprises a resilient or flexible contact pad or surface (8) for contact with a bearing surface (4) of the second component (4).

9. A method according to any one of claims 1 to 8, wherein a seal member (7) is provided around the cavity (2) of the mould (1) for sealing against the second component.

10. A method according to any one of claims 1 to 9, wherein the polymer or resin material is a thermosetting polymer or synthetic resin and is preferably compatible with a polymer of the first and/or second component (W, P) for co-curing or co-bonding therewith.

11. A method according to any one of claims 1 to 9, wherein the polymer or resin material is a thermoplastic polymer or resin, which may set upon cooling after injection into the mould.

12. A method according to any one of claims 1 to 11, wherein the polymer or resin material includes a filler, such as short fibres, for a reinforcing or strengthening effect.

13. A system (100) for producing a fibre-reinforced polymer composite structure (S), such as in a fuselage or airframe (F) of an aircraft, comprising:
a mould (1) having a cavity (2) for receiving a first component (W);
a support member (3) for supporting and/or applying pressure to a second component (P) adjacent the mould (1); injection means for injecting a polymer or resin (9) into the cavity (2) of the mould (1) to pervade and fill gaps and/or spaces between the first component (W) and the second component (P);
**characterized in that** the support member (3) is configured and arranged to support the second component (P) pressed against an open side of the mould cavity (2), such that the cavity (2) of the mould (1) containing the first component (W) is sealed against a facing side (6) of the second component (P).

14. A system (100) according to claim 13, further comprising heating means for heating the polymer or resin (9) together with the first component (W) and/or the second component (P) in the cavity (2) of the mould (1), e.g. to cure the polymer or resin (9) and bond the first and second components (W, P) to form the structure (S).

## Patentansprüche

1. Verfahren zur Herstellung einer faserverstärkten Polymer-Verbundstruktur (S), beispielsweise einer Flugwerk- oder Rumpfstruktur eines Luftfahrzeugs (A), das folgende Schritte umfasst:
Anordnen einer ersten Komponente (W) innerhalb eines Hohlraums (2) eines Werkzeugs (1);
Anordnen einer zweiten Komponente (P) angrenzend an den oder neben dem Hohlraum (2) des Werkzeugs (1), der die erste Komponente (W) umfasst;
wobei die erste Komponente (W) und/oder die zweite Komponente (P) faserverstärktes Polymermaterial enthält;
Einspritzen eines Polymers oder Harzes (9) in den Hohlraum (2) des Werkzeugs (1) zum Vergießen und/oder Ausfüllen von Lücken oder Zwischenräumen zwischen der ersten Komponente (W) und der zweiten Komponente (P); und
Härten oder Aushärten des Polymers oder Harzes (9) innerhalb des Werkzeugs (1) zum Verkleben der ersten Komponente (W) mit der zweiten Komponente (P) und dadurch Ausbilden der Struktur (S), **gekennzeichnet durch** Abdichten des Hohlraums (2) an der zweiten Komponente (P).

2. Verfahren nach Anspruch 1, wobei das Polymer oder Harz (9) in den Hohlraum (2) eingespritzt wird und so die erste Komponente (W) im Kontakt mit der zweiten Komponente (P) umgibt, vergießt und/oder ausfüllt.

3. Verfahren nach Anspruch 1 oder Anspruch 2, wobei die erste Komponente (W) ein nicht gehärteter, faserverstärkter Polymer-Vorformling ist.

4. Verfahren nach einem der Ansprüche 1 bis 3, wobei die zweite Komponente (P) eine vorgehärtete faserverstärkte Polymerkomponente ist.

5. Verfahren nach einem der Ansprüche 1 bis 3, wobei die zweite Komponente (P) eine Nicht-Verbund-Komponente ist, die beliebig aus einem Kunststoff- oder Polymermaterial, Aluminium, Titan, Stahl oder einem anderen Metall oder einer Keramik besteht.

6. Verfahren nach einem der Ansprüche 1 bis 5, wobei der Schritt des Anordnens der zweiten Komponente (P) angrenzend an den Hohlraum (2) des Werkzeugs (1) Folgendes umfasst: Drücken der zweiten Komponente (P) gegen eine offene Seite des Werkzeugs (1) und/oder Drücken einer offenen Seite des Hohlraums (2) gegen eine zugewandte Seite (6) der zweiten Komponente (P).

7. Verfahren nach Anspruch 6, wobei der Schritt des Drückens der zweiten Komponente (P) gegen eine offene Seite des Hohlraums (2) ein Bereitstellen eines Halteelements (3) umfasst, das die zweite Komponente (P) hält und Druck darauf ausübt und sie dadurch in Richtung des und gegen das Werkzeug (1) drückt.

8. Verfahren nach Anspruch 7, wobei das Halteelement (3) eine elastische oder flexible Kontaktstelle oder -fläche (8) für den Kontakt mit einer Lagerfläche (4) der zweiten Komponente (**P**) umfasst.

9. Verfahren nach einem der Ansprüche 1 bis 8, wobei ein Dichtelement (7) um den Hohlraum (2) des Werkzeugs (1) herum zum Abdichten an der zweiten Komponente vorgesehen wird.

10. Verfahren nach einem der Ansprüche 1 bis 9, wobei das Polymer- oder Harzmaterial ein wärmehärtbares Polymer oder Kunstharz ist und vorzugsweise mit einem Polymer der ersten und/oder zweiten Komponente (W, P) kompatibel ist, damit es gemeinsam damit härtet oder damit verklebt.

11. Verfahren nach einem der Ansprüche 1 bis 9, wobei das Polymer- oder Harzmaterial ein thermoplastisches Polymer oder Harz ist, das beim Abkühlen nach Einspritzen in das Werkzeug aushärten kann.

12. Verfahren nach einem der Ansprüche 1 bis 11, wobei das Polymer- oder Harzmaterial einen Füllstoff wie Kurzfasern für eine verstärkende oder festigende Wirkung aufweist.

13. System (100) zur Herstellung einer faserverstärkten Polymer-Verbundstruktur (S), beispielsweise in einem Rumpf oder Flugwerk (F) eines Luftfahrzeugs, umfassend:
ein Werkzeug (1) mit einem Hohlraum (2) zum Aufnehmen einer ersten Komponente (W);
ein Halteelement (3) zum Halten einer und/oder Ausüben von Druck auf eine zweite Komponente (P) angrenzend an das Werkzeug (1); Einspritzmittel zum Einspritzen eines Polymers oder Harzes (9) in den Hohlraum (2) des Werkzeugs (1) zum Ausfüllen und/oder Füllen von Lücken oder Zwischenräumen zwischen der ersten Komponente (W) und der zweiten Komponente (P);
**dadurch gekennzeichnet, dass** das Halteelement (3) so eingerichtet und angeordnet ist, dass es die zweite Komponente (P) derart gegen eine offene Seite des Werkzeughohlraums (2) gedrückt hält, dass der Hohlraum (2) des Werkzeugs (1), der die erste Komponente (W) umfassst, an einer zugewandten Seite (6) der zweiten Komponente (P) abgedichtet ist.

14. System (100) nach Anspruch 13, ferner umfassend Heizmittel zum Erwärmen des Polymers oder Harzes (9) gemeinsam mit der ersten Komponente (W) und/oder der zweiten Komponente (P) in dem Hohlraum (2) des Werkzeugs (1), zum Beispiel zum Härten des Polymers oder Harzes (9) sowie zum Verkleben der ersten und zweiten Komponente (W, P) zwecks Ausbildung der Struktur (S).

## Revendications

1. Procédé de production d'une structure composite (S) en polymère renforcé de fibres, telle qu'une structure de cellule ou de fuselage d'un aéronef (A), comprenant les étapes consistant à :
agencer un premier composant (W) à l'intérieur d'une cavité (2) d'un moule (1) ;
agencer un second composant (P) de manière adjacente ou voisine à la cavité (2) du moule (1) contenant le premier composant (W) ;
dans lequel au moins un composant parmi le premier composant (W) et le second composant (P) comprend un matériau polymère renforcé de fibres ;
injecter un polymère ou une résine (9) dans la cavité (2) du moule (1) afin d'infuser et/ou d'imprégner des écarts ou des espaces entre le premier composant (W) et le second composant (P) ; et
durcir ou cuire le polymère ou la résine (9) à l'intérieur du moule (1) pour coller le premier composant (W) avec le second composant (P) et former ainsi la structure (S),
**caractérisé en ce qu'**il consiste à étanchéifier la cavité (2) contre le second composant (P).

2. Procédé selon la revendication 1, dans lequel le polymère ou la résine (9) est injecté (e) dans la cavité (2) pour entourer, infuser et/ou imprégner le premier composant (W) en contact avec le second composant (P).

3. Procédé selon la revendication 1 ou la revendication 2, dans lequel le premier composant (W) est une ébauche en polymère renforcé de fibres, non durcie.

4. Procédé selon une des revendications 1 à 3, dans lequel le second composant (P) est un composant en polymère renforcé de fibres, pré-durci.

5. Procédé selon une quelconque des revendications 1 à 3, dans lequel le second composant (P) est un composant non non-composite composé d'un matériau quelconque parmi un matériau plastique ou polymère, l'aluminium, le titane, l'acier, ou un autre métal ou une céramique.

6. Procédé selon une quelconque des revendications 1 à 5, dans lequel l'étape consistant à agencer le second composant (P) de manière adjacente à la cavité (2) du moule (1) comporte une étape ou plus consistant à : presser le second composant (P) contre un côté ouvert du moule (1), et/ou presser un côté ouvert de la cavité (2) contre un côté en regard (6) du second composant (P).

7. Procédé selon la revendication 6, dans lequel l'étape consistant à presser le second composant (P) contre un côté ouvert de la cavité (2) consiste à fournir un élément de support (3) qui supporte le second composant (P) et applique une pression sur celui-ci en le pressant vers et contre le moule (1).

8. Procédé selon la revendication 7, dans lequel l'élément de support (3) comprend un patin ou une surface de contact résilient(e) ou flexible (8) pour venir en contact avec une surface d'appui (4) du second composant (P).

9. Procédé selon une quelconque des revendications 1 à 8, dans lequel un élément d'étanchéité (7) est prévu autour de la cavité (2) du moule (1) pour l'étanchéisation contre le second composant.

10. Procédé selon une quelconque des revendications 1 à 9, dans lequel le matériau en polymère ou résine est un polymère thermodurcissable ou une résine synthétique et est de préférence compatible avec un polymère du premier et/ou second composant (W, P) pour co-durcir ou co-coller avec celui-ci.

11. Procédé selon une quelconque des revendications 1 à 9, dans lequel le matériau en polymère ou résine est un(e) polymère ou résine thermoplastique qui peut durcir lors du refroidissement après l'injection dans le moule.

12. Procédé selon une quelconque des revendications 1 à 11, dans lequel le matériau en polymère ou résine comporte un rembourrage, telles des fibres courtes, pour un effet de renforcement ou de consolidation.

13. Système (100) de production d'une structure composite (S) en polymère renforcé de fibres, telle que dans un fuselage ou une cellule (F) d'un aéronef, comprenant :
un moule (1) ayant une cavité (2) pour recevoir un premier composant (W) ;
un élément de support (3) pour supporter un second composant (P) adjacent au moule (1) et/ou appliquer une pression contre celui-ci ;
un moyen d'injection pour injecter un polymère ou une résine (9) dans la cavité (2) du moule (1) afin d'imprégner et de remplir des écarts et/ou espaces entre le premier composant (W) et le second composant (P) ; **caractérisé en ce que**
l'élément de support (3) est configuré et agencé pour supporter le second composant (P) pressé contre un côté ouvert de la cavité (2) du moule, de telle sorte que la cavité (2) du moule (1) contenant le premier composant (W) est étanchéifiée contre un côté en regard (6) du second composant (P).

14. Système (100) selon la revendication 13, comprenant en outre un moyen de chauffage pour chauffer le polymère ou la résine (9) conjointement avec le premier composant (W) et/ou le second composant (P) dans la cavité (2) du moule (1), par exemple pour durcir le polymère ou la résine (9) et coller les premier et second composants (W, P) afin de former la structure (S).
